Europäisches Patentamt

European Patent Office

Office européen des brevets

(11) Veröffentlichungsnummer: **0 620 135 A2**

## (12) EUROPÄISCHE PATENTANMELDUNG

(21) Anmeldenummer: **94104657.5**

(22) Anmeldetag: **24.03.94**

(51) Int. Cl.5: **B60K 1/04**

(30) Priorität: **13.04.93 DE 9305524 U**

(43) Veröffentlichungstag der Anmeldung:
**19.10.94 Patentblatt 94/42**

(84) Benannte Vertragsstaaten:
**BE CH DE FR GB IT LI LU NL SE**

(71) Anmelder: **GOTTLOB AUWÄRTER GmbH & Co.**
**Vaihinger Strasse 122**
**D-70567 Stuttgart (DE)**
Anmelder: **VARTA Batterie Aktiengesellschaft**
**Am Leineufer 51**
**D-30419 Hannover (DE)**

(72) Erfinder: **Lee, Robert**
**Karl-Spitzweg-Strasse 19**
**D-70771 Leinfelden (DE)**

Erfinder: **Bittihn, Rainer, Dr.**
**Scheienweg 20**
**D-58553 Halver (DE)**
Erfinder: **Wöffler, Friedrich**
**Schwerter Strasse 137**
**D-58099 Hagen (DE)**
Erfinder: **Wittke, Karl-Heinz**
**Auf der Breite 44**
**D-58093 Hagen (DE)**
Erfinder: **Wildhagen, Klaus**
**Rostesiepen 168**
**D-58313 Herdecke (DE)**

(74) Vertreter: **Kaiser, Dieter Ralf, Dipl.-Ing.**
**Gundelhardtstrasse 72**
**D-65779 Kelkheim (DE)**

(54) **Wechselstation für mit austauschbaren Akkumulatoren ausgerüstete Elektrostrassenfahrzeuge.**

(57) Eine Batteriewechselstation für Elektrostraßenfahrzeuge enthält in einem mobilen, handelsüblichen Container (1) als Gehäuse neben den notwendigen Wartungseinrichtungen, insbesondere Ladegeräten, die komplette Wechselvorrichtung, bestehend aus einem seitwärts verfahrbaren Scherenhubtisch (4) mit einem Rollensystem (19) und einem ausklappbaren Rollenausleger (20) welcher an ein Rollenband (21) im Batterieraum des vor einem geöffneten Rolltor (10) des Containers (1) geparkten Fahrzeugs angekoppelt wird und mit diesem eine kraftschlüssige Verbindung herstellt. Dies ermöglicht einen problemlosen Transport der Traktionsbatterien vom Fahrzeug zu den Ladeplätzen und in umgekehrter Richtung allein mit Hilfe des am Scherenhubtisch befindlichen Rollenbandantriebes, wobei das Rollenband (19) des Hubtisches (4) mit den Rollenbändern der Ladeplätze ebenfalls kraftschlüssig verkuppelbar ist.

Fig. 3

EP 0 620 135 A2

Die Erfindung betrifft eine Wechselstation für mit austauschbaren Batterien ausgerüstete Elektrostraßenfahrzeuge.

Elektrostraßenfahrzeuge sind bis heute trotz ihrer unbestreitbaren ökologischen Vorteile mit der Problematik behaftet, daß größere Speicherkapazitäten der Batterien und damit ein annehmbarer Aktionsradius mit einem sehr hohen Gewicht der Batterie erkauft werden müssen. Ein rationeller Einsatz dieser Fahrzeuge ist jedoch mit auswechselbaren Batterien und durch Einrichtung von Batteriewechselstationen möglich, an denen ein Austausch von dort leergefahrenen Batterien eines Fahrzeuges gegen aufgeladene Batterien vorgenommen werden kann.

Dieser Batteriewechsel soll in möglichst kurzer Zeit erfolgen und erfordert daher eine besondere Technik. Die Traktionsbatterie muß dabei aus dem Fahrzeug herausgenommen und über eine Wechseleinrichtung auf einen Lagerplatz zur Wiederaufladung und Wartung abgestellt, eine neue von dort entnommen und in das Elektrofahrzeug eingeschoben werden.

Da es sich bei den Batterien, je nach Fahrzeugart, um erhebliche Gewichte handelt, wurden für die Elektro-Busse und Elektro-Transporter getrennte Wechseleinrichtungen entwickelt, die sich dadurch voneinander unterscheiden, daß bei den Elektro-Bussen die Wechseleinrichtungen und die Lade- und Wartungsplätze für die Batterien eine konstruktive Einheit bilden, während beim Elektro-Transporter das Auswechseln mittels beweglichen Wechselwagen zwischen dem Transporter und dem feststehenden Lade- und Wartungsplatz vorgenommen wird.

Ein solcher Wechselwagen ist mit einer Förderkette versehen und kann zwecks Aufnahme bzw. Abgabe von Batterien an das in Wechselstellung fixierbare Fahrzeug senkrecht zu dessen Fahrtrichtung herausgefahren werden. Gemäß DE-PS 25 35 454 ist ein Wechselwagen durch Verstellbarkeit seiner Räder und mittels eines an seinem Boden befestigten, in einen Führungsschlitz ragenden Zapfens sowohl zu einer Drehbewegung als auch zu eine Schiebebewegung in Längsrichtung befähigt. Auf diese Weise besitzt der Wechselwagen die Funktion einer Drehscheibe, über die sich Batterien zwischen dem Fahrzeug und Batterieabstell- oder Ladeplätzen an der rückwärtigen Peripherie dieser Drehscheibe hin und her transportieren lassen. Ein auf dem Wechselwagen installierter Scherenhubtisch, wie man ihn z.B. der DE-AS 24 10 102 entnehmen kann, ermöglicht auch die Bedienung von Batterieabstellplätzen mit übereinander angeordneten Regalen.

In der DE-PS 2 114 962 ist eine Batteriewechselstation beschrieben, bei der die Batterien im Durchschiebeverfahren gewechselt werden und auf einem endlosen Förderband (Paternosterprinzip) gespeichert werden. Die Höhenangleichung des Fahrzeuges an die Durchschiebeebene erfolgt durch eine Hebebühne sowie durch Kupplungshülsen und in diese einfahrbare Kupplungsbolzen. Diese für eine Automatisierung an sich geeignete Einrichtung erfordert allerdings einen beträchtlichen konstruktiven Aufwand.

Aus der DE-PS 24 22 960 ist auch eine Wechselstation bekannt, an deren einer Seite zwei Schwenkarme in horizontalem Abstand zueinander angelenkt sind, welche in Aussparungen von Anschlagteilen, die sich am Fahrzeug befinden, einrasten und das Fahrzeug dadurch exakt auf eine für den Batterieaustausch erforderliche Längsposition zur Wechseleinrichtung festlegen. Mittels Hub-Kolben-Trieben sind die Schwenkarme außerdem in einem begrenzten Bereich höhenverstellbar, so daß das Fahrzeug bei Bedarf angehoben werden kann.

Der Erfindung liegt die Aufgabe zugrunde, eine Batteriewechselstation verfügbar zu machen, die insbesondere mit Blick auf die Erfordernisse eines Busliniendienstes einen sehr schnellen Austausch der Traktionsbatterien gestattet, wobei der Wechselvorgang möglichst nur von einer Person, nämlich dem Busfahrer selbst, ohne großen körperlichen Kraftaufwand durchführbar ist.

Die Aufgabe wird erfindungsgemäß mit Hilfe einer Wechselstation gelöst, wie sie im Patentanspruch 1 definiert ist.

Die Wechselstation wird demnach von einem handelsüblichen Container gebildet, dessen Inneres in einen Batterieraum mit Batteriewechselvorrichtung und einen die Ladegeräte enthaltenden Raum aufgeteilt ist. Dieser handelsübliche Container ist leicht von einem Einsatzort zum nächsten Einsatzort transportierbar und ermöglicht einen mobilen Einsatz. Ein wesentlicher Bestandteil der Batteriewechselvorrichtung ist dabei ein mit Teleskoparmen versehenes Rollenband, welches - nach Öffnen eines Rolltores am Containergehäuse - nach außen ausklappbar ist und die Verbindung zwischen dem Fahrzeug und dem Batterieraum herstellt.

Dieses Rollenband wird an ein im Elektrostraßenfahrzeug vorhandenes Rollenband, auf dem der Batterietrog ruht, mittels einer Einhängevorrichtung angekoppelt, wobei die Auszugslänge der Teleskoparme geringe unterschiedliche Distanzen zwischen beiden Rollenbändern ausgleicht. Dabei werden diese durch das gleichzeitige wechselseitige Eingreifen eines Zahnradgetriebes kraftschlüssig miteinander verbunden.

Durch die kraftschlüssige Verbindung treibt ein dem Rollenband der Batteriewechselvorrichtung im Innern des Containers zugeordneter Elektromotor das Rollenband im Fahrzeug an und gestattet so, die Batterie aus diesem in den Batterieraum des Containers zu überführen.

Von der Batteriewechselvorrichtung, die als Scherenhubtisch ausgebildet und selbst auf Schienen im Batterieraum seitlich verfahrbar ist, gelangt die Batterie auf ihren Abstell- oder Ladeplatz, indem der Scherenhubtisch mit seiner vom Fahrzeug abgewandten Seite an eines der Batterie-Aufnahmeregale, die den rückwärtigen Batterieraum einnehmen, ankoppelt. Auch die Aufnahmeregale besitzen Rollenbänder, welche sich beim Andocken des Hubtisches kraftschlüssig mit dessen Rollenband verbinden.

Der Transport der entladenen Batterie vom Fahrzeug zum Batterieladeplatz und umgekehrt der vollgeladenen Batterie in das Fahrzeug geht somit ausschließlich über Rollenbahnabschnitte vonstatten, die mit dem Hubtisch als Wechselwagen und dessen Rollensystem verkoppelt und von diesem wieder entkoppelt werden. Alle Transportvorgänge werden von einer zentralen Stelle aus durch Knopfdruck gesteuert.

Nähere Einzelheiten der Erfindung, auch zur Ausführung des Containers, sind der nachfolgenden Funktionsbeschreibung der Wechselstation zu entnehmen und an Hand von Figuren verdeutlicht.

Figur 1 zeigt die erfindungsgemäße Wechselstation in einer Außenansicht.

Figur 2 zeigt die Innenaufteilung des als Stationsgehäuse dienenden Containers.

Figur 3 zeigt einen Querschnitt durch die Wechselstation.

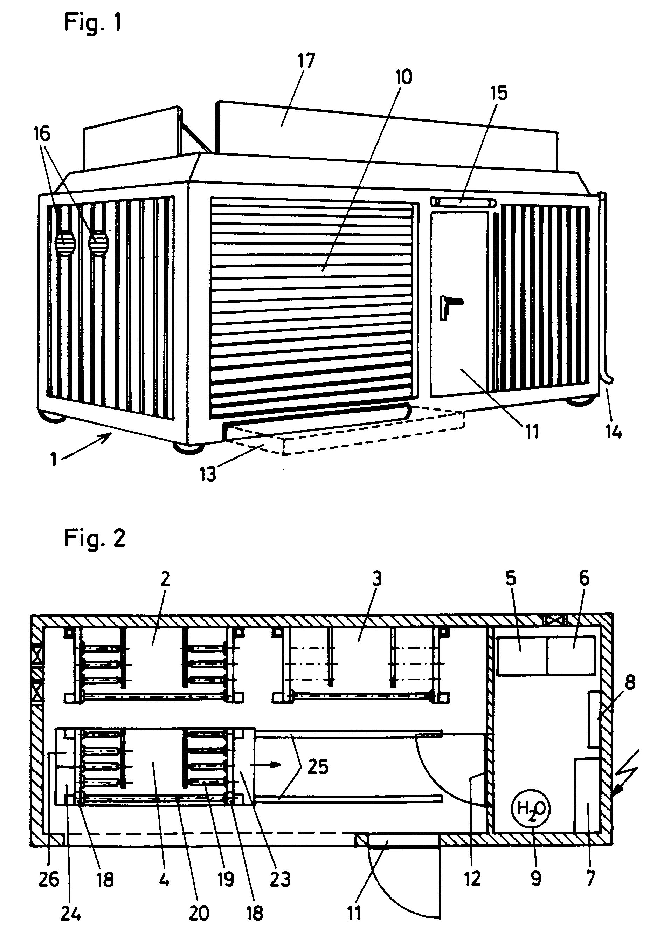

Nach Figur 1 befindet sich die Wechselstation in einem als industrielles Serienprodukt gefertigten, handelsüblichen Container 1 aus kunststoffbeschichtetem und mit Acrylharz lackiertem Profilblech. Die Außenmaße betragen (L x B x H) 6 m x 2,43 m x 2,625 m. Sein Nutzvolumen ist in zwei Räume (siehe Figur 2) unterteilt. Im größeren Raum befinden sich die Ladeplätze 2, 3 in jeweils übereinander angeordneten Regalen sowie die als Hubtisch 4 ausgebildete komplette Batteriewechseleinrichtung.

Im kleineren Raum sind die Ladegeräte (Gleichrichter) 5, 6, die Energiezuführung 7 (über Kabel mit Isolation im Außenbereich), eine Wandheizung 8 und eine Batteriewasser-Nachfüllanlage 9 untergebracht. Beide Räume werden zwangsbelüftet und haben Beleuchtung.

Der Batterieraum ist durch ein über ca. 2 m breites Rolltor 10 sowie durch eine ca. 1 m breite Tür 11 zugänglich. Der Raum für die Ladegeräte verfügt über eine weitere Tür 12 zum Batterieraum.

Im äußeren Bereich des Containers vor dem Rolltor befindet sich der Aufnahmebereich des Busses. Zu seiner besseren Positionierung ist unter dem Rolltor eine ausziehbare Stopschwelle 13 für die Hinterräder vorgesehen. Zu den weiteren äußerlich sichtbaren Ausstattungen des Containers zählen u.a. nach Figur 1 ein Regenfallrohr 14, eine Außenleuchte 15 und zwei Ventilatoren 16 für eine Zwangsbelüftung. Auf einem Dachaufsatz können Reklametafeln 17 angebracht werden.

Zum Batteriewechsel fährt der Busfahrer den Bus rückwärts an den Container heran. Dabei schaltet bei Dunkelheit ein Näherungsschalter eine Außenbeleuchtung selbsttätig ein. Sodann öffnet der Fahrer über Motorantrieb, gegebenenfalls durch Nothandkurbel, das Rolltor des Containers, wobei auch hier über Schlüsselschalter die Innenbeleuchtung eingeschaltet wird. Hiernach ist ein Öffnen der Bus-Heckklappe möglich.

Nunmehr beginnt der Wechselvorgang, indem der Hubtisch 4 mittels Druckschalter bzw. Taster (Totmann-Schaltung) aus seiner Parkstellung in die Übernahmeposition gebracht wird. Dazu wird der vom Hubtisch hochstehende und mit Teleskoparmen 18 versehene Teil seines Rollenbandes 19 (Rollenausleger 20) ausgeklappt und mittels Haken oder Klauen, die sich an den Enden der Teleskoparme befinden (nicht dargestellt) in entsprechende Halteeinrichtungen des Bus-Rollenbandes 21 eingerastet. Durch gleichzeitig in wechselseitigen Eingriff gebrachte Zahnräder 22 wird das Bus-Rollenband mit dem motorgetriebenen Rollenband des Hubtisches kraftschlüssig verbunden.

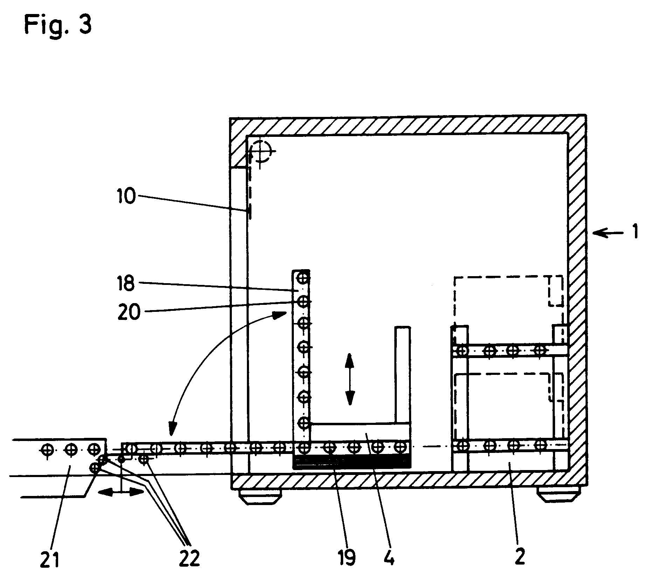

Diese Betriebsphase nach Herstellung der kraftschlüssigen Verbindung zwischen Bus-Rollenband 21 und Hubtisch-Rollenband 19 über den heruntergeschwenkten Ausleger 20 ist in Figur 3 festgehalten. An der vorderen Schmalseite des Hubtisches 4 befindet sich der Antriebsmotor 23 für das Rollenband 19, 20 , an der rückseitigen Schmalseite ein Fahrmotor 24 für die Bewegung auf der Laufschiene 25 (vergleiche Figur 2).

Nach dem Entfernen einer Haltetraverse am Fahrzeug kann die entladene Batterie per Druckschalter aus dem Batterieraum des Busses herausgefahren werden. Eine anfängliche Stopstellung des gesamten Rollentraktes macht ein vorzeitiges, unbeabsichtigtes Herausrollen der Batterie unmöglich.

Die Batterie wird nun auf den Hubtisch 4 gefahren und der Rollenausleger 19 danach hochgeklappt (Ruheposition). Anschließend fährt der Scherenhubtisch 4 durch Anheben, Absenken mittels des Hubmotors 26 bzw. seitliches Verschieben einen leeren Ladeplatz an. Endschalter sorgen für die korrekte Positionierung zu den Ladeplätzen.

Gleichzeitig mit der Positionierung wird eine kraftschlüssige Verbindung zum Rollenband des Ladeplatzes hergestellt. Danach kann die Batterie in das Laderegal eingefahren werden. Auch hierbei sorgen Endschalter für den automatischen Stop. Der Fahrer kuppelt den Ladestecker mit der Batteriesteckdose und startet hierdurch den Ladevorgang (sowie bei Bedarf die automatische Wassernachfüllung).

Jeder Ladeplatz verfügt über optische Batteriezustandsanzeigen, die Batterieladung, Störung oder Volladung der Batterie anzeigen.

Zur Entnahme einer vollgeladenen Batterie wird ein Ladeplatz mit entsprechender Kontrollanzeige angesteuert. Alle Funktionsabläufe beim Ausfahren der geladenen Batterie sind die gleichen wie beim Einfahren der entladenen Batterie, umgekehrt ist nur die Drehrichtung der Rollenbänder.

Nach dem Einfahren der Batterie in den Batterieraum des Busses wird die Haltetraverse eingesetzt und verriegelt. Der Rollenausleger 19 wird hochgeklappt und der Scherenhubtisch 4 in Parkstellung gefahren. Über eine Steckerkupplung wird die elektrische Verbindung zwischen Fahrzeugmotor und Fahrzeugelektrik und Batterie hergestellt. Die Bus-Heckklappe wird geschlossen und das Rolltor zugefahren; die Beleuchtung erlischt selbsttätig.

**Patentansprüche**

1. Wechselstation für mit austauschbaren Batterien ausgerüstete Elektrostraßenfahrzeuge, dadurch gekennzeichnet, daß sie einen handelsüblichen Container (1) als Gehäuse besitzt, welcher in einen Batterieraum mit Batteriewechselvorrichtung und einen die Ladegeräte enthaltenden Raum unterteilt ist, und daß zum Batteriewechsel zwischen Fahrzeug und Batterieraum ein ausklappbares, mit Teleskoparmen (18) versehenes Rollenband (20) vorgesehen ist.

2. Wechselstation nach Anspruch 1, dadurch gekennzeichnet, daß das Rollenband (20) mit einem im Elektrostraßenfahrzeug vorhandenen Rollenband (21) kraftschlüssig verbindbar ist.

3. Wechselstation nach den Ansprüchen 1 und 2, dadurch gekennzeichnet, daß die Teleskoparme (18) in eine Befestigungsvorrichtung, die am Fahrzeug angeordnet ist, eingreifen.

4. Wechselstation nach den Ansprüchen 1 bis 3, dadurch gekennzeichnet, daß die Rollen des Rollenbandes (21) im Fahrzeug und die Rollen des Rollenbandes (19, 20) der Wechselstation durch einen gemeinsamen Zahnradantrieb antreibbar sind.

5. Wechselstation nach den Ansprüchen 1 bis 4, dadurch gekennzeichnet, daß im Batterieraum mehrere Batterien auf Regalen (2,3) angeordnet sind, und daß sie mittels eines verfahrbaren Scherenhubtisches (4) auf das Rollenband (19) im Batterieraum absetzbar sind.

6. Wechselstation nach den Ansprüchen 1 bis 5, dadurch gekennzeichnet, daß der Scherenhubtisch (4) auf Laufschienen (23) angeordnet ist.

7. Wechselstation nach den Ansprüchen 1 bis 6, dadurch gekennzeichnet, daß die Rollen des Hubtisches (4) und die Regale (2, 3) kraftschlüssig miteinander koppelbar sind.

8. Wechselstation nach den Ansprüchen 1 bis 7, dadurch gekennzeichnet, daß im Laderaum Ladegeräte (5, 6) und Vorrichtungen der Energieversorgung (7) sowie eine Wassernachfüllorrichtung (9) angeordnet sind.

Fig. 1

Fig. 2

# Fig. 3